# FASCICULE DE BREVET EUROPEEN

(11) **EP 1 251 285 B1**
(45) Date de publication et mention de la délivrance du brevet: **29.11.2006**
(21) Numéro de dépôt: 02291007.9
(22) Date de dépôt: 19.04.2002
(51) Int. Cl.: F16B 5/00, B62D 33/04, B62D 29/04, B60R 19/24

(54) **Ensemble de deux pièces de carrosserie à réunir bord à bord et une pièce de carrosserie appartenant à un tel ensemble**
Anordnung zur Zusammenstellung zweier Karrosserieteile, Kant gegen Kant , und Karrosserie , in dieser Weise zusammengesetzt
Assembly for uniting two bodywork pieces at their edges and bodywork thus united

(30) Priorité: 19.04.2001 FR 0105330
(43) Date de publication de la demande: 23.10.2002
(73) Titulaire: COMPAGNIE PLASTIC OMNIUM, 69007 Lyon (FR)
(72) Inventeur: Delavalle, Dominique, 01100 Marchon (FR); Cordebar, Francis, 01100 Veyziat (FR); Andre, Gérald, 01100 Oyonnax (FR); Jacquemard, Claude, 01640 Jujurieux (FR)
(74) Mandataire: Remy, Vincent Noel Paul

(56) Documents cités:
- EP-A- 0 779 183
- EP-A- 0 886 072
- DE-A- 1 575 260
- GB-A- 2 339 457

## Description

La présente invention concerne un ensemble de deux pièces de carrosserie à réunir bord à bord et une pièce de carrosserie appartenant à un tel ensemble.

On sait que les pièces de carrosserie nécessitent de plus en plus d'être parfaitement mises en référence les unes par rapport aux autres afin d'assurer l'esthétique du véhicule.

Dans cette optique, on a déjà imaginé un certain nombre de solutions consistant à fixer précisément chaque pièce de carrosserie sur la structure du véhicule, en veillant à ce que des pièces de carrosserie adjacentes bénéficient de points de fixation voisins, voire identiques, sur leurs bords contigus.

Les fixations mises en jeu dans ces solutions doivent être relativement solides car elles assurent le soutien des pièces de carrosserie en même temps que leur mise en référence.

Ces fixations sont généralement constituées par des pièces rapportées, souvent en métal, et il en résulte des problèmes de coût, tant en fourniture qu'en main d'oeuvre.

La présente invention vise à fournir un nouvel ensemble de deux pièces de carrosserie dont l'assemblage est simple et rapide et qui procure un positionnement relatif des deux pièces d'une grande précision.

La présente invention a pour objet un ensemble de deux pièces de carrosserie comportant les caractéristiques de la revendication 1.

Selon l'invention, on entend par rebord une partie en saillie de la pièce de carrosserie qui délimite son bord.

On comprend que l'invention procure un moyen simple de solidariser les bords en regard des deux pièces, d'une manière à la fois robuste, simple, rapide et sans recourir à de nombreuses pièces de fixation rapportées.

En effet, grâce à l'invention, les deux pièces de carrosserie sont immobilisées l'une par rapport à l'autre dans les trois directions grâce à leurs languettes et à l'unique organe de maintien.

Dans un mode de réalisation particulier de l'invention, chaque rebord comporte une pluralité de languettes dont chacune s'intercale entre deux languettes de l'autre rebord.

De préférence, les languettes d'un rebord sont espacées deux à deux d'une distance sensiblement égale à la largeur de la languette de l'autre rebord devant s'intercaler entre elles.

Par exemple, les languettes peuvent présenter, sur chacune des deux pièces de carrosserie, une largeur constante égale à la distance entre deux languettes. Dans ce cas, les languettes appartenant alternativement à l'une et l'autre de deux pièces de carrosserie se croisent et s'immobilisent mutuellement.

On comprend bien ce croisement des languettes si l'on se représente la position des doigts d'une personne qui croise les mains.

Dans un mode de réalisation particulier de l'invention, l'organe de maintien comporte au moins une cavité ouverte grâce à laquelle il coiffe les deux languettes et une partie au moins des deux rebords des deux pièces assemblées, ladite cavité ayant au moins un point d'appui contre chaque languette et au moins un point d'appui contre chaque rebord.

Conformément à certaines caractéristiques particulières de l'invention :
- chaque languette présente, à son extrémité, une réduction de largeur facilitant son introduction entre les deux languettes de l'autre rebord,
- chaque languette s'étend sensiblement perpendiculairement aux rebords,
- les languettes sont orientées de manière que les deux pièces de carrosserie s'assemblent selon l'axe longitudinal du véhicule,
- l'organe de maintien est un profilé rigide dont la section transversale, au droit de la cavité, délimite intérieurement au moins une partie des contours des sections transversales des languettes et au moins une partie des contours des sections transversales des rebords des deux pièces assemblées,
- l'organe de maintien est un profilé élastique comportant deux ailes délimitant la cavité et aptes à s'écarter l'une de l'autre par déformation élastique pour laisser passer les deux languettes par l'ouverture de la cavité,
- l'une au moins des pièces comporte des moyens d'encliquetage avec l'organe de maintien pour assurer la retenue de ce dernier sur les languettes des deux rebords,
- l'une au moins des deux pièces est réalisée en matière plastique, thermoplastique ou thermodurcissable,
- l'organe de maintien est réalisé en matière plastique.

L'invention a également pour objet une pièce de carrosserie comportant une face extérieure et un rebord sensiblement perpendiculaire à cette face extérieure, caractérisée en ce que ledit rebord comporte au moins une languette s'étendant transversalement audit rebord, au-delà de la face extérieure de ladite pièce de carrosserie.

Dans un mode de réalisation particulier, la pièce de carrosserie comporte une pluralité de languettes espacées deux à deux.

Avantageusement, la pièce de carrosserie comporte des moyens d'encliquetage avec un organe de maintien engagé sur son rebord.

Afin de faciliter la compréhension de l'invention, on va maintenant en décrire des modes de réalisation donnés à titre d'exemples à l'aide des dessins annexés dans lesquels :
- la figure 1 est une vue partielle de la face intérieure d'une aile avant et d'un pare-chocs d'un véhicule automobile,
- la figure 2 est une vue en coupe selon II-II de la figure 3, montrant les deux pièces assemblées à l'aide d'un organe de maintien,
- la figure 3 est une vue en coupe selon III-III de la figure 2,
- la figure 4 est une vue en perspective d'un coin de l'aile,
- la figure 5 est une vue latérale selon la flèche V de la figure 3,
- la figure 6 est une vue en perspective de l'organe de maintien,
- la figure 7 est une vue analogue à la figure 3 d'un autre mode de réalisation,
- la figure 8 est une vue en perspective de deux parties d'un bouclier de pare-chocs devant être réunies à l'aide d'un organe de maintien selon un autre mode de réalisation de l'invention,
- la figure 9 est une section selon IX-IX de la figure 8, les deux parties du bouclier étant assemblées,
- la figure 10 est une section selon X-X de la figure 8, les deux parties du bouclier étant assemblées,
- la figure 11 est une vue en perspective d'une partie d'un élément de pare-chocs selon un autre mode de réalisation,
- la figure 12 est une section selon XII-XII de l'élément de la figure 11 réuni à une autre pièce de carrosserie,
- la figure 13 est une vue en perspective de l'organe de maintien,
- la figure 14 est une vue analogue à la figure 12 d'un autre mode de réalisation.

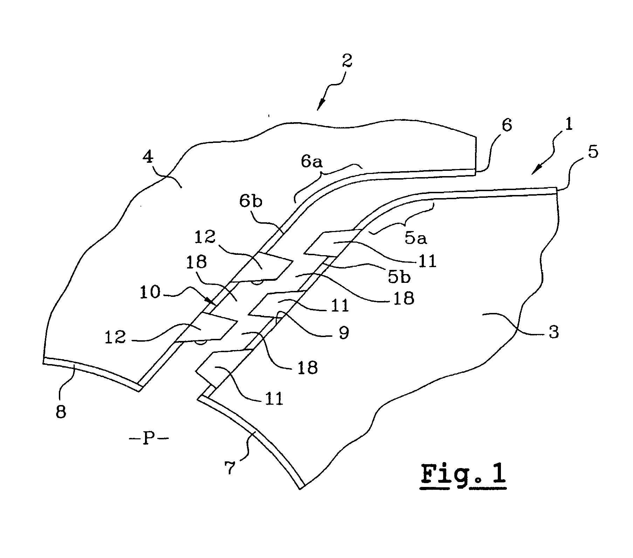

On a représenté partiellement, sur la figure 1, deux pièces de carrosserie d'un véhicule automobile, à savoir un pare-chocs 1 et une aile 2, qui sont destinés à s'assembler conformément à l'invention.

P désigne, sur la figure 1, une arche de roue.

Le pare-chocs 1 et l'aile 2 sont réalisés par moulage dans une matière thermoplastique, éventuellement renforcée.

Le pare-chocs 1 comporte une paroi 3 dont seule la face intérieure est visible sur la figure 1.

L'aile 2 comporte une paroi 4 dont la face extérieure, non apparente sur la figure 1, doit être positionnée sensiblement dans la continuité de face extérieure de la paroi 3 du pare-chocs 1.

Des rebords 5, 6 et des retours 7, 8 se raccordent sensiblement perpendiculairement aux parois 3 et 4, à l'interface entre l'aile et le pare-chocs pour les rebords 5, 6 et autour de l'arche de roue P pour les retours 7, 8.

Ces rebords 5, 6 et retours 7, 8 sont réalisés d'un seul tenant avec les parois 3 et 4 respectives, et s'étendent sensiblement perpendiculairement au plan de la figure 1.

Les retours 7, 8 se raccordent sensiblement perpendiculairement aux rebords 5, 6.

Comme on peut le voir sur la figure 1, les rebords 5 et 6 comportent chacun deux portions rectilignes situées de part et d'autre de portions arrondies respectives 5a et 6a.

Les portions rectilignes qui s'étendent depuis les portions arrondies 5a et 6a jusqu'à l'arche de roue P sont référencées respectivement 5b et 6b.

Ces rebords rectilignes 5b et 6b sont munis, sur leurs bords libres respectifs 9 et 10, de languettes transversales 11,12 sensiblement parallèles aux parois 3 et 4.

Le pare-chocs 1 comporte ainsi une série de languettes 11 qui se raccordent perpendiculairement au rebord 5 et s'étendent en direction de l'aile 2, tandis que l'aile 2 comporte une série de languettes 12 qui se raccordent perpendiculairement au rebord 6, et qui s'étendent en direction du pare-chocs 1.

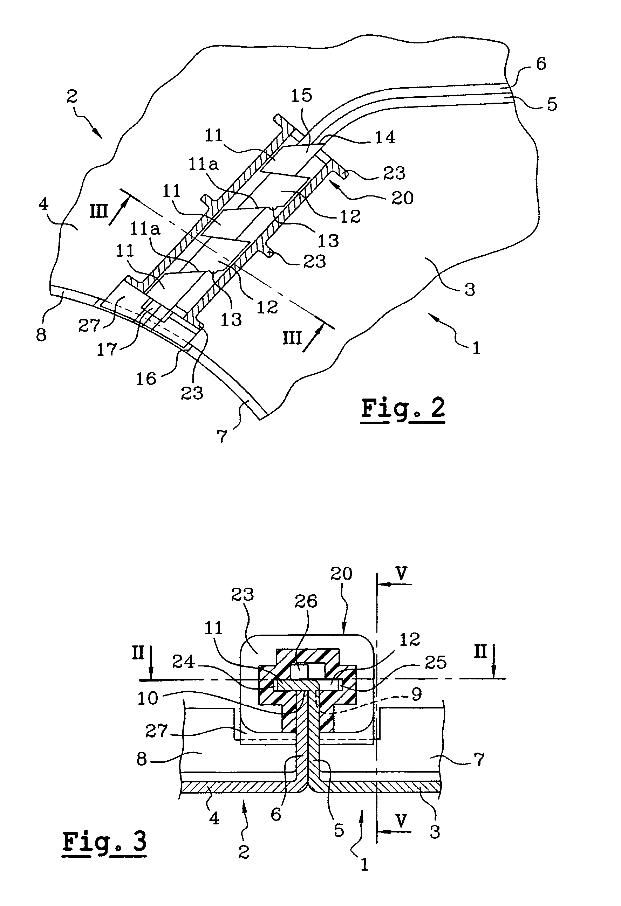

Comme on le voit sur la figure 3, la longueur de chaque languette 11, 12 est supérieure à l'épaisseur du rebord adjacent 6, 5 de l'autre pièce, de sorte que lorsque les rebords 5, 6 sont accolés, comme représenté sur les figures 2 et 3, chaque languette 11, 12 présente une partie d'extrémité qui dépasse au-delà dudit rebord adjacent.

Les languettes 11, 12 sont espacées deux à deux sur chaque rebord et ménagent entre elles des intervalles 18 dimensionnés pour recevoir les languettes 12, 11 de l'autre rebord 6, 5.

Ainsi, les languettes 11, 12 s'imbriquent les unes dans les autres comme les doigts de deux mains croisées, lorsque les pièces sont assemblées, comme on peut le voir sur la figure 2.

Pour faciliter le rapprochement des deux pièces, chaque languette 11, 12 présente une forme trapézoïde, dont la plus grande base se situe dans la continuité du rebord portant ladite languette.

Le nombre de languettes s'imbriquant est choisi notamment en fonction de la longueur des rebords à assembler et de la tenue mécanique souhaitée pour la liaison.

Lorsque les languettes 11, 12 sont imbriquées et que les rebords 5 et 6 reposent l'un contre l'autre, les languettes 12 viennent sensiblement en appui sur le bord libre 9 du rebord 5 et les languettes 11 viennent sensiblement en appui sur le bord libre 10 du rebord 6, comme on peut le voir sur la figure 3.

Pour l'une au moins des séries de languettes, à savoir la série de languettes 12 de l'exemple illustré, ces dernières comportent en outre, sur l'un de leurs côtés latéraux, un bossage 13, situé en un emplacement choisi de telle sorte qu'un coin 11a du bord d'une languette 11 adjacente situé du côté du rebord 5 vienne en appui sur ce bossage 13 lorsque les pièces sont assemblées, comme on peut le voir sur la figure 2.

Les bossages 13 sont franchis par déformation élastique et/ou avec friction lors du rapprochement des pièces et opposent ensuite une certaine résistance à l'écartement des deux pièces, ce qui les maintient temporairement en position assemblée durant la mise en place d'un organe de maintien, comme cela sera expliqué plus loin.

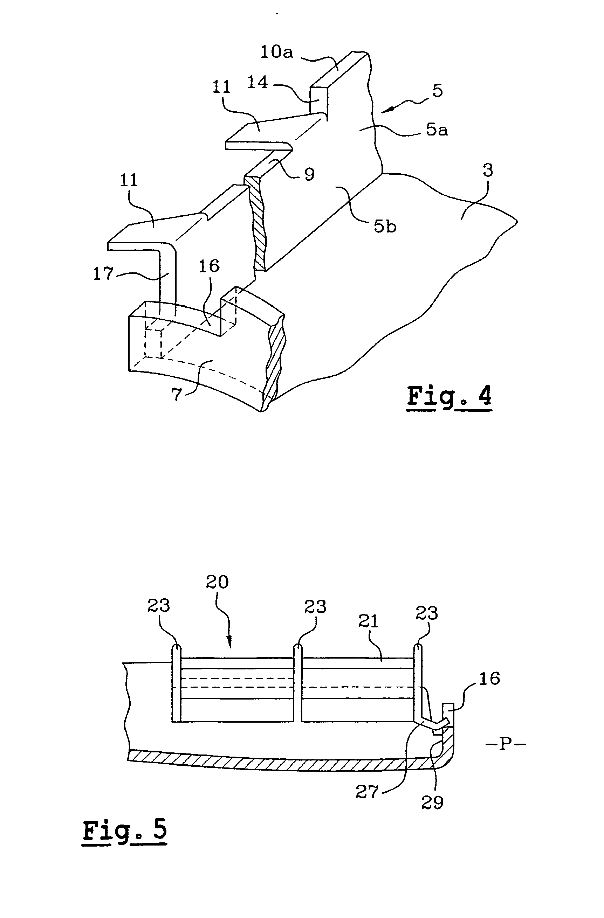

Au moins l'un des rebords 5 et 6 présente, comme on peut le voir sur la figure 4, un décrochement 14 destiné à servir de butée de fin de course d'insertion pour l'organe de maintien 20.

Le bord libre 10 de la portion rectiligne 5b du rebord 5 portant les languettes 11 se situe à un niveau inférieur à celui du bord libre 10a de la portion arrondie 5a qui prolonge la portion 5b et qui est dépourvue de languettes, la différence de niveau correspondant à la hauteur du décrochement 14.

Le rebord 5 comporte également un tel décrochement 15, ces deux décrochements 14 et 15 définissant une surface sensiblement plane servant d'appui à l'organe de maintien, comme on peut le voir sur la figure 2.

Les retours 7 et 8 comportent une découpe 16 délimitant une ouverture d'accès aux languettes depuis l'arche de roue P.

Chacun des rebords 5 et 6 comporte, adjacente aux retours 7, 8, une gorge 17 dont le rôle sera précisé plus loin.

Chaque gorge 17 est formée par une diminution de la hauteur du rebord 5, 6 au niveau de son raccordement au retour 7 ou 8 associé.

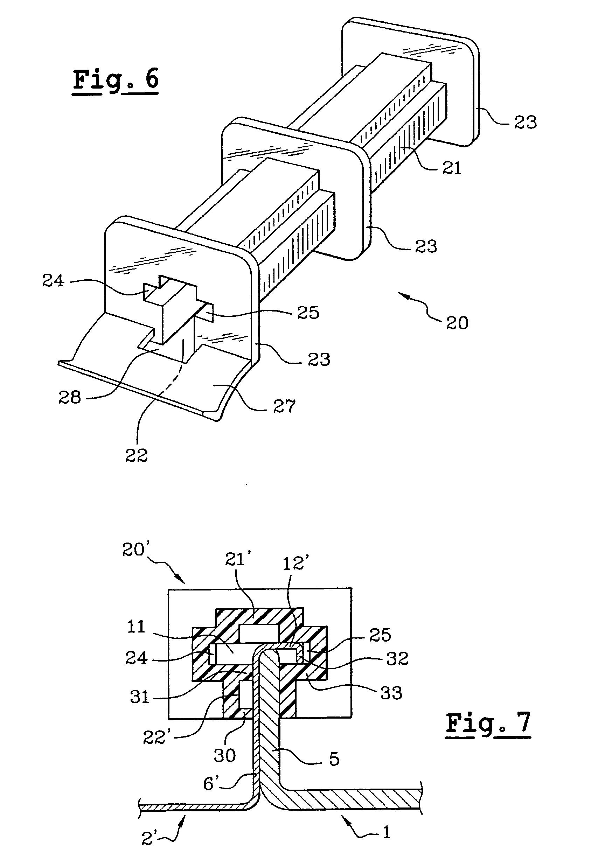

On va maintenant décrire l'organe de maintien 20, représenté seul sur la figure 6 et avec les deux pièces assemblées sur les figures 2, 3 et 5.

L'organe de maintien 20 comporte un corps allongé se présentant essentiellement sous la forme d'un profilé 21 rigide comportant une cavité intérieure, de section transversale constante, ouverte vers le bas par une ouverture longitudinale 22, et en forme générale de croix, comme on peut le voir notamment sur la figure 3.

La section transversale extérieure du profilé 21 présente une forme générale de croix et l'organe de maintien 20 comporte, en des emplacements espacés sur la longueur du profilé 21, des nervures de rigidification 23 s'étendant sur tout le périmètre extérieur du profilé et visant à empêcher l'écartement des deux moitiés du profilé situées de part et d'autre de son ouverture longitudinale.

La largeur de l'ouverture longitudinale 22 du profilé 21 correspond aux épaisseurs cumulées des rebords 5 et 6 à l'état accolé, de sorte que ces derniers sont empêchés de s'écarter une fois que l'organe de maintien 20 est en place.

La section transversale intérieure du profilé 21 définit deux gorges latérales 24 et 25 dont la largeur correspond sensiblement à l'épaisseur des languettes respectives 11 et 12 qui s'y engagent, comme on peut le voir sur la figure 3.

La profondeur des gorges latérales 24 et 25 est légèrement supérieure à la longueur des pattes 11 et 12.

Lorsque le profilé 21 est engagé sur les languettes 11 et 12, les rebords 5, 6 sont empêchés de se déplacer verticalement l'un par rapport à l'autre, les languettes 11, 12 venant, comme on peut le voir sur la figure 3, en appui à la fois par leurs faces supérieures et par leurs faces inférieures sur le profilé 21.

Un espace 26 est ménagé à l'intérieur du profilé 21, au-dessus des languettes 11, 12 extrémités non comprises, afin de réduire les frottements avec celles-ci et ainsi faciliter le coulissement de l'organe de maintien 20 lors de la mise en place de ce dernier.

Comme indiqué plus haut, l'organe de maintien 20 est introduit par l'ouverture délimitée par les découpes 16 et donnant sur le passage de roue.

Pour assurer son maintien en position sur les languettes, l'organe de maintien 20 comporte une patte de retenue 27 élastiquement déformable à son extrémité arrière, comme on peut le voir sur la figure 5.

La patte de retenue 27 s'étend vers l'arrière, avec une légère inclinaison par rapport au reste du profilé. Son extrémité libre s'engage, lorsque le profilé est en place sur les languettes, dans les gorges 17.

La patte de retenue 27 comporte, dans une zone médiane, un évidement 28 de dégagement pour les rebords 5 et 6, permettant à ladite patte élastique de se déformer sans buter contre ceux-ci.

En fin de course d'engagement de l'organe de maintien 20 sur les rebords 5 et 6, la patte 27 franchit par déformation élastique la découpe 16 puis vient en appui après franchissement de celle-ci contre la face intérieure 29 des retours 7 et 8, comme on le voit sur la figure 5.

L'organe de maintien 20 est alors immobilisé à l'avant par butée contre les décrochements 14 et 15 et à l'arrière par appui de la patte 27 contre les retours 7 et 8.

On peut démonter l'assemblage en retirant l'organe de maintien 20 après avoir relevé la patte élastique 27, puis en écartant l'aile 2 et le pare-chocs 1 ainsi désolidarisés.

Dans l'exemple décrit, l'organe de maintien 20 est introduit sur les languettes et retiré de ces dernières par coulissement parallèlement au plan de contact des portions rectilignes 5b et 6b des rebords 5 et 6.

On remarque que grâce à l'orientation des languettes, le pare-chocs 1 s'assemble avec l'aile 2 selon un axe X sensiblement horizontal et parallèle à l'axe du véhicule, ce qui facilite l'introduction du pare-chocs 1.

Les deux pièces à assembler peuvent être réalisées toutes deux en matière plastique, comme cela vient d'être décrit, les épaisseurs des rebords 5 et 6 ainsi que celles des languettes 11 et 12 étant alors de préférence sensiblement identiques.

L'invention permet également d'assembler deux pièces en métal ou une pièce en plastique et une pièce en métal n'ayant pas les mêmes épaisseurs.

A titre d'exemple, on a représenté sur la figure 7 l'assemblage d'un pare-chocs 1 identique au précédent et d'une aile 2' en tôle, cette aile 2' comportant, tout comme l'aile 2 précédemment décrite, un rebord 6' agencé pour se plaquer contre le rebord 5 du pare-chocs 1 et une pluralité de languettes 12' agencées pour s'imbriquer entre les languettes 11 et interdire le déplacement relatif des deux pièces le long des bords assemblés.

Un organe de maintien 20' permet de maintenir assemblé le pare-chocs 1' et l'aile 2.

Cet organe de maintien 20' comporte un profilé 21' qui diffère essentiellement du profilé 21 précédemment décrit par la présence au niveau de l'ouverture 22' du profilé 21' de deux nervures longitudinales 30 et 31 destinées à compenser le manque d'épaisseur du rebord 6' par rapport au rebord 6.

Les nervures 30 et 31 s'appliquent contre le rebord 6' de manière à permettre au profilé 20' d'empêcher les rebords 5 et 6' de s'écarter.

Les languettes 12' comportent un rebord 32 formé par pliage vers le bas à angle droit de l'extrémité de chaque languette 12' afin de compenser le différentiel d'épaisseur entre la tôle avec laquelle les languettes 12' sont réalisées et la hauteur de la gorge latérale 25.

Le rebord 32 peut présenter un bord libre inférieur 33 arrondi, de manière à réduire sa surface de contact avec la paroi inférieure de la gorge 25 et faciliter l'engagement du profilé 21.

La hauteur du rebord 32 correspond sensiblement à la hauteur des gorges latérales 24 et 25, de sorte que l'organe de maintien 20' empêche un déplacement vertical relatif des rebords 5 et 6'.

Dans les exemples de réalisation qui viennent d'être décrits, l'organe de maintien est mis en place par un mouvement de coulissement selon son axe longitudinal, ce qui permet un montage en aveugle dudit organe de maintien à partir d'un passage d'extrémité et convient notamment pour assurer un assemblage de pièces sur véhicule, où l'accès aux bords à assembler est souvent difficile.

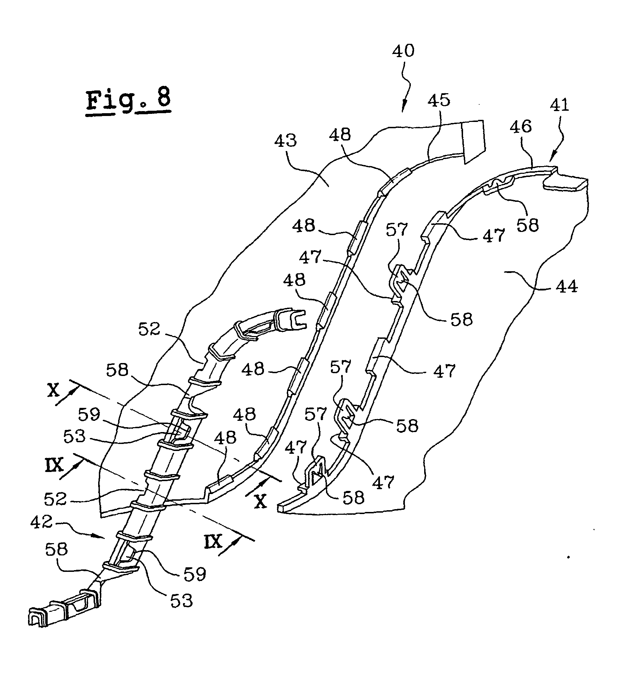

On ne sort pas du cadre de la présente invention lorsque l'organe de maintien est mis en place sur les languettes par un mouvement selon une direction différente de la direction longitudinale de l'organe de maintien, par exemple selon une direction perpendiculaire à l'axe longitudinal de l'organe de maintien, comme cela va maintenant être décrit en référence aux figures 8 à 10.

Dans ce cas, l'assemblage des pièces nécessite un accès aux rebords sur toute leur longueur et l'application de l'invention concerne alors plutôt le domaine des pièces pré-assemblées avant montage sur le véhicule.

On a représenté, sur la figure 8, deux éléments de pare-chocs 40, 41 destinés à être assemblés conformément à l'invention, à l'aide d'un organe de maintien 42.

Chaque élément de pare-chocs 40, 41 comporte une paroi 43, 44, les surfaces extérieures de ces parois 43 et 44 devant être disposées dans la continuité l'une de l'autre.

A cet effet, chaque élément comporte un rebord 45, 46 venant en appui contre le rebord de l'autre pièce.

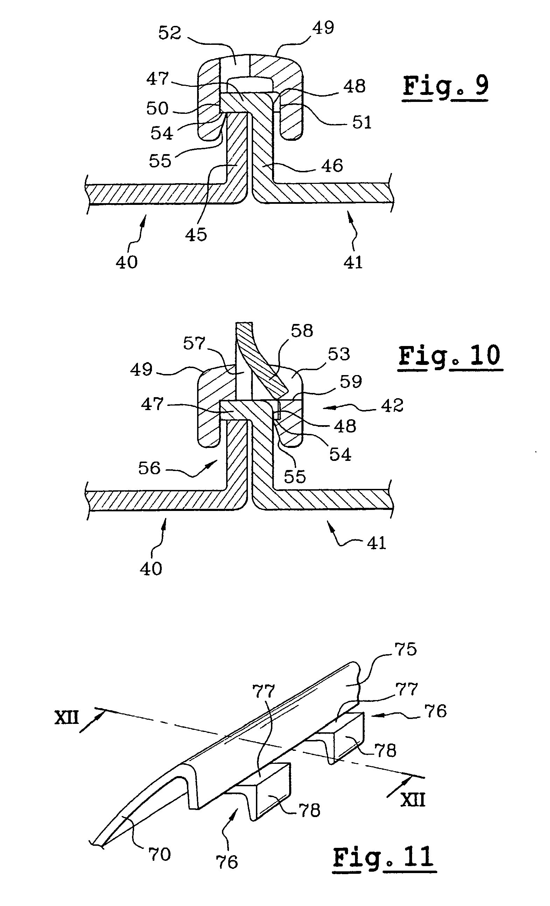

Comme on peut le voir notamment sur la figure 9, chaque rebord 45, 46 comporte, sur son bord libre, des languettes 47, 48 dirigées vers l'autre pièce de carrosserie, régulièrement espacées d'une distance égale à la longueur d'une languette, de manière qu'une languette 47 de l'une des pièces de carrosserie puisse s'engager entre deux languettes 48 voisines de l'autre pièce de carrosserie, lorsque les pièces de carrosserie sont rapprochées.

Comme l'organe de maintien 20 de la figure 6, l'organe de maintien 42 est constitué par un profilé 49 définissant intérieurement des portions longitudinales de gorges latérales 50 et 51 dimensionnées pour recevoir les extrémités des languettes 47, 48 qui dépassent au-delà du rebord 46, 45 de l'autre pièce.

Pour tenir compte des contraintes de démoulage, ces gorges 50 et 51 ne sont définies que sur des portions de longueur du profilé, en regard de crevés 52, 53 situés alternativement de part et d'autre du plan médian longitudinal du profilé et permettant la formation de portées longitudinales 54 délimitant inférieurement lesdites portions de gorges.

Dans cet exemple de réalisation, le profilé 49 est apte à s'ouvrir par déformation élastique pour sa mise en place sur les deux rebords. Il comporte à cet effet des chanfreins 55 sous chaque portée longitudinale 54, ces chanfreins prenant appui sur les languettes 47, 48, lors de l'insertion de l'organe de maintien selon une direction perpendiculaire à sa direction longitudinale, pour agrandir l'ouverture 56 afin d'engager les deux languettes dans les gorges 50 et 51.

Comme on le voit sur la figure 8, certaines languettes 47 supportent une excroissance 57 qui constitue un moyen d'encliquetage avec l'organe de maintien. Chaque excroissance 57 comporte une patte élastique 58, mieux visible sur la figure 10, qui dépasse latéralement de l'excroissance en direction opposée à la languette 47 et qui coopère avec le crevé 53 qui se trouve au droit de l'excroissance lorsque ledit organe de maintien est en place.

Le crevé 53 se situe dans la moitié de la section transversale de l'organe de maintien située du côté de la patte élastique et est délimité inférieurement (dans son orientation de la figure 10) par une butée 59 de retenue de la patte élastique 58. Supérieurement, le crevé 53 laisse un dégagement suffisant pour permettre à un utilisateur de contraindre la patte élastique 58 dans l'excroissance 57 pour la libérer de la butée 59 et permettre l'extraction de l'organe de maintien 42. Lors de cette extraction, les extrémités des languettes 47, 48 écartent l'ouverture 56 par déformation élastique du profilé 49.

L'organe de maintien 42 est donc aussi aisément encliquetable sur les rebords que démontable.

Comme représenté à la figure 8, les rebords 45 et 46 présentent une forme sinusoïdale que l'organe de maintien 42 doit suivre fidèlement.

L'organe de maintien 42 est une pièce en matière plastique moulée qui, dès son démoulage peut présenter la configuration sinusoïdale requise pour son positionnement sur les rebords 45 et 46. Toutefois, on peut, pour des raisons de moulage, préférer la réaliser à "plat", c'est-à-dire dans une configuration rectiligne, en intercalant entre deux de ses portions rectilignes, des charnières qui lui permettront de prendre une configuration sensiblement sinusoïdale. Ainsi, dans l'exemple de la figure 8, les charnières sont constituées par des rétrécissements de section 60 flexibles. Dans une variante non représentée, les charnières sont constituées par des portions en élastomère co-moulées avec la matière plastique constituant le reste de l'organe de maintien 42.

Bien que cela ne soit pas le cas sur les figures 9 et 10, il est préférable d'approcher le plus possible l'organe de maintien des faces internes des pièces, tout en tenant compte du galbe de la carrosserie qui peut contraindre à maintenir un certain écartement entre l'organe de maintien et lesdites pièces.

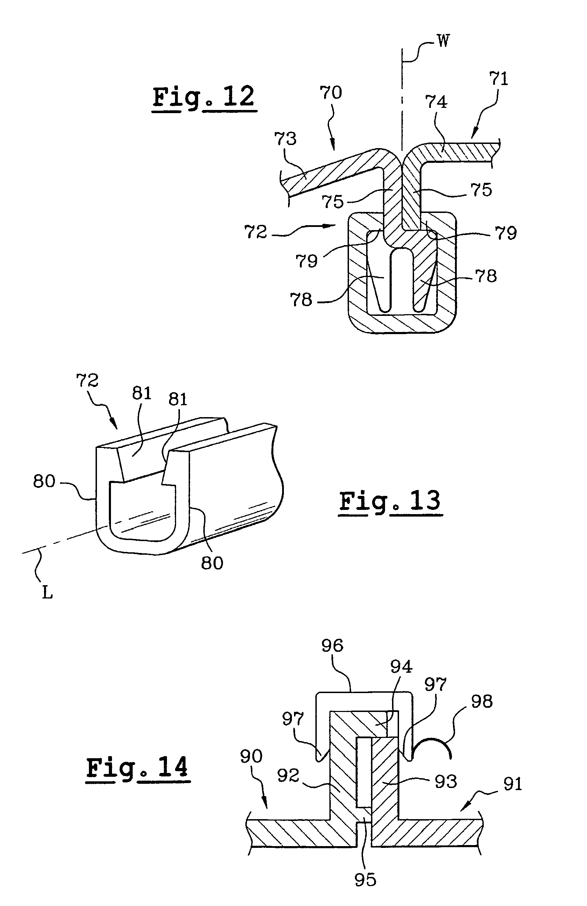

On a représenté, sur la figure 11, un élément de pare-chocs 70 destiné à être assemblé conformément à l'invention à une aile 71 représentée en coupe avec le pare-chocs sur la figure 12, à l'aide d'un organe de maintien en matière plastique 72 représenté isolément sur la figure 13.

L'élément de pare-chocs 70 et l'aile 71 comportent chacun respectivement une paroi 73 et une paroi 74, les surfaces extérieures de ces parois 73 et 74 devant être disposées dans la continuité l'une de l'autre.

Les pièces 70 et 71 comportent chacune un rebord 75 venant en appui contre le rebord de l'autre pièce.

Comme on peut le voir notamment sur la figure 11, chaque rebord 75 comporte, sur son bord libre, des languettes 76 dirigées vers l'autre pièce de carrosserie, régulièrement espacées d'une distance égale à la longueur d'une languette 76, de manière qu'une languette 76 de l'une des pièces de carrosserie puisse s'engager entre deux languettes 76 voisines de l'autre pièce de carrosserie, lorsque les pièces de carrosserie 70 et 71 sont rapprochées.

Chaque languette 76 comporte une portion de base 77 se raccordant perpendiculairement au rebord 75 et une portion d'extrémité 78, perpendiculaire à la portion de base 77, et dirigée vers l'intérieur, c'est-à-dire vers le bas sur la figure 11.

Comme on le voit sur la figure 12, la largeur de la portion de base 77 est supérieure à l'épaisseur du rebord 75 de manière à définir, lorsque les pièces de carrosserie 70 et 71 sont rapprochées, un relief d'accrochage 79.

Le profilé 72 présente une section transversale ouverte en forme générale de U, avec deux branches latérales 80 comportant à leurs extrémités supérieures des rebords 81 recourbés vers l'intérieur de la concavité du U.

Lorsque le profilé 72 est engagé sur les pièces de carrosserie 70 et 71, les rebords 81 viennent s'accrocher sur les reliefs 79, tandis que les extrémités libres des portions 78 des languettes prennent appui contre le fond du profilé en U.

On obtient ainsi une liaison positive dans les trois axes entre l'élément de pare-chocs 70 et l'aile 71, les mouvements d'écartement ou de rapprochement étant empêchés par le serrage du profilé sur les rebords 75, les mouvements de cisaillement étant empêchés par les languettes imbriquées 76 et les mouvements de décalage planaire étant empêchés par les appuis des languettes sur les rebords 81 d'une part et sur le fond du profilé d'autre part.

Le profilé 72 est encliqueté sur les pattes 76 en étant déplacé dans une direction W perpendiculaire à son axe longitudinal L.

L'organe de maintien peut comporter des moyens de préhension destinés à faciliter le montage.

A titre d'exemple, on a représenté, sur la figure 14, un assemblage comprenant deux pièces de carrosserie 90 et 91 et au moins un organe de maintien 96.

Les pièces de carrosserie 90 et 91 comportent respectivement un rebord 92 et un rebord 93, ces rebords présentant à leurs extrémités libres des languettes 94 perpendiculaires au rebord correspondant et s'étendant en direction du rebord de l'autre pièce de carrosserie.

Les languettes 94 des rebords 92 et 93 sont agencées pour s'imbriquer lorsque les pièces de carrosserie 90 et 91 sont rapprochées.

Le rebord 92 comporte à sa partie inférieure (par rapport à la figure 14) un bossage 95 venant en appui sur le rebord 93 de l'autre pièce de carrosserie 91.

Ce bossage 95 permet de maintenir un jeu prédéterminé entre les pièces de carrosserie 90 et 91.

L'organe de maintien 96, réalisé en métal, présente une section transversale en U avec, au niveau des extrémités de branches latérales du U, des griffes 97 aptes à s'accrocher sur les rebords 92 et 93.

L'organe de maintien comporte en outre un moyen de préhension 98 permettant à un opérateur d'écarter les deux branches latérales au moyen d'un doigt ou d'un outil, afin de procéder à son retrait.

On peut notamment prévoir, en plus des languettes et organe de maintien, des moyens permettant de renforcer la liaison, comme par exemple des éléments de fixation conventionnels.

## Revendications

1. Ensemble de deux pièces de carrosserie (1, 2, 2', 40, 41, 70, 71, 90, 91) comportant chacune une face extérieure et un rebord (5, 6, 6', 45, 46, 75, 92, 93) sensiblement perpendiculaire à cette face extérieure, destiné à s'appliquer contre le rebord de l'autre pièce, chaque rebord comportant au moins une languette (11, 12, 12', 47, 48, 76, 94), l'ensemble comprenant en outre un organe de maintien (20, 20', 42, 72, 80, 96) apte à s'engager autour des languettes en les immobilisant l'une par rapport à l'autre dans une position prédéterminée dans laquelle les deux pièces de carrosserie sont réunies rebord contre rebord, **caractérisé en ce que** la languette du rebord de chaque pièce s'étend vers l'autre pièce au-delà du rebord de ladite autre pièce.

2. Ensemble selon la revendication 1, dans lequel chaque rebord (5, 5', 6, 45, 46, 75, 92, 93) comporte une pluralité de languettes (11, 12, 12', 47, 48, 76, 94) dont chacune s'intercale entre deux languettes de l'autre rebord.

3. Ensemble selon la revendication 2, dans lequel les languettes d'un rebord sont espacées deux à deux d'une distance (18) sensiblement égale à la largeur de la languette de l'autre rebord devant s'intercaler entre elles.

4. Ensemble selon l'une quelconque des revendications 2 et 3, dans lequel chaque languette (11, 12) présente, à son extrémité libre, une réduction de largeur facilitant son introduction entre les deux languettes de l'autre rebord.

5. Ensemble selon l'une quelconque des revendications 1 à 4, dans lequel chaque languette (11, 12, 12', 47, 48. 94) est plane et s'étend sensiblement perpendiculairement au rebord.

6. Ensemble selon l'une quelconque des revendications 1 à 5, dans lequel les languettes sont orientées de manière que les deux pièces de carrosserie s'assemblent selon la direction longitudinale du véhicule.

7. Ensemble selon l'une quelconque des revendications 1 à 6, dans lequel l'organe de maintien (20, 20', 42, 72, 80, 96) comporte au moins une cavité ouverte grâce à laquelle il coiffe les deux languettes et une partie au moins des deux rebords des deux pièces assemblées, ladite cavité ayant au moins un point d'appui contre chaque languette et au moins un point d'appui contre chaque rebord.

8. Ensemble selon la revendication 7, dans lequel l'organe de maintien (20, 20') est un profité rigide dont la section transversale, au droit de la cavité, délimite intérieurement au moins une partie des contours des sections transversales des languettes et au moins une partie des contours des sections transversales des rebords des deux pièces assemblées.

9. Ensemble selon la revendication 7, dans lequel l'organe de maintien (42, 72, 80, 96) est un profilé élastique comportant deux ailes délimitant la cavité et aptes à s'écarter l'une de l'autre par déformation élastique pour laisser passer les deux languettes par l'ouverture de la cavité.

10. Ensemble selon l'une quelconque des revendications 1 à 9, dans lequel l'une au moins des pièces (41) comporte des moyens d'encliquetage (58) avec l'organe de maintien (42) pour assurer la retenue de ce dernier sur les languettes (47, 48) des deux rebords (45, 46).

11. Ensemble selon l'une quelconque des revendications 1 à 10, dans lequel l'une au moins des deux pièces (1, 2, 40, 41, 70, 71, 90, 91) est réalisée en matière plastique, thermoplastique ou thermodurcissable.

12. Ensemble selon l'une quelconque des revendications 1 à 11, dans lequel l'organe de maintien (20,20', 42, 72, 80) est réalisé en matière plastique.

13. Pièce de carrosserie d'un ensemble selon l'une quelconque des revendications 1 à 12 comportant une face extérieure et un rebord sensiblement perpendiculaire à cette face extérieure, comportant au moins une languette, **caractérisée en ce que** la languette s'étend transversalement audit rebord, au-delà de ladite face extérieure, de manière à pouvoir s'intercaler entre deux languettes d'une autre pièce.

14. Pièce de carrosserie selon la revendication 13, comportant une pluralité de languettes espacées deux à deux.

15. Pièce de carrosserie selon la revendication 13 ou 14, comportant des moyens d'encliquetage avec un organe de maintien engagé sur son rebord.

16. Pare-chocs de véhicule automobile selon la revendication 13, 14 ou 15.

17. Aile de véhicule automobile selon la revendication 13, 14 ou 15.

## Claims

1. An assemblage of two pieces of bodywork (1, 2, 2', 40, 41, 70, 71, 90, 91) each piece having an outside face and a flange (5, 6, 6', 45, 46, 75, 92, 93) substantially perpendicular to said outside face and intended for pressing against the flange of the other piece, each flange carrying at least one tongue (11, 12, 12', 47, 48, 76, 94), the assemblage further comprising a fastener member (20, 20', 42, 72, 80, 96) suitable for engaging around the tongues and for preventing them from moving relative to one another when in a predetermined position in which the two pieces of bodywork are united flange against flange, **characterized in that** the tongue of the flange of each piece extends towards the other piece beyond the flange of said other piece.

2. An assemblage according to claim 1, wherein each flange (5, 5', 6, 45, 46, 75, 92, 93) carries a plurality of tongues (11, 12, 12', 47, 48, 76, 94), each of which can be engaged between two tongues of the other flange.

3. An assemblage according to claim 2, wherein the tongues of one flange are spaced apart in pairs by a distance (18) substantially equal to the width of the tongue on the other flange that is to be interposed between them.

4. An assemblage according to claim 2 or claim 3, wherein the free end of each tongue (11, 12) presents a reduction of width making it easier to insert between two tongues of the other flange.

5. An assemblage according to any one of claims 1 to 4, wherein each tongue (11, 12, 12', 47, 48, 94) is plane and extends substantially perpendicularly to its flange.

6. An assemblage according to any one of claims 1 to 5, wherein the tongues are oriented in such a manner that the two pieces of bodywork assemble together along the longitudinal direction of the vehicle.

7. An assemblage according to any one of claims 1 to 6, wherein the fastener member (20, 20', 42, 72, 80, 96) has at least one open cavity enabling it to cover two tongues together with at least a portion of the two flanges of two assembled-together pieces, said cavity having at least one bearing point against each tongue and at least one bearing point against each flange.

8. An assemblage according to claim 7, wherein the fastener member (20, 20') is a rigid section member of cross-section in register with the cavity that defines internally at least a portion of the outlines of the cross-sections of the tongues and at least a portion of the outlines of the cross-sections of the flanges of the two assembled-together pieces.

9. An assemblage according to claim 7, wherein the fastener member (42, 72, 80, 96) is a resilient section member having two branches defining the cavity and suitable for splaying apart from each other by elastic deformation to allow the two tongues to pass through the opening into the cavity.

10. An assemblage according to any one of claims 1 to 9, wherein at least one of the pieces (41) carries means (58) for snap-fastening with the fastener member (42) so as to hold the fastener member on the tongues (47, 48) of the two flanges (45, 46).

11. An assemblage according to any one of claims 1 to 10, wherein at least one of the two pieces (1, 2, 40, 41, 70, 71, 90, 91) is made of a thermoplastic or thermosetting plastics material.

12. An assemblage according to any one of claims 1 to 11, wherein the fastener member (20, 20', 42, 72, 80) is made of plastics material.

13. A piece of bodywork of an assemblage according to any one of claims 1 to 12, having an outside face and a flange substantially perpendicular to said outside face, said flange carrying at least one tongue **characterized in that** the tongue extends transversely to said flange, projecting beyond said outside face, so that it can be engaged between the tongues of another piece.

14. A piece of bodywork according to claim 13, comprising a plurality of tongues spaced apart in pairs.

15. A piece of bodywork according to claim 13 or claim 14, including means for snap-fastening with a fastener member engaged on its flange.

16. A motor vehicle bumper in accordance with claim 13, 14, or 15.

17. A motor vehicle fender in accordance with claim 13, 14, or 15.

## Patentansprüche

1. Baugruppe aus zwei Karosserieteilen (1, 2, 2', 40, 41, 70, 71, 90, 91), von denen jedes eine Außenfläche und einen Rand (5, 6, 6', 45, 46, 75, 92, 93) aufweist, der sich im Wesentlichen im rechten Winkel zu dieser Außenfläche befindet und zu dem Rand des anderen Teiles passen soll, wobei jeder Rand mindestens eine Zunge (11, 12, 12', 47, 48, 76, 94) aufweist, wobei die Baugruppe außerdem ein Halteteil (20, 20', 42, 72, 80, 96) umfasst, das um die Zungen herumgreifen kann und sie in einer vorgegebenen Position zueinander fixiert, in der die beiden Karosserieteile Rand an Rand miteinander verbunden sind, **dadurch gekennzeichnet, dass** die Randzunge jedes Teiles sich gegenüber dem anderen Teil über den Rand des jeweiligen anderen Teiles hinaus erstreckt.

2. Baugruppe nach Anspruch 1, bei der jeder Rand (5, 5', 6, 45, 46, 75, 92, 93) eine Vielzahl von Zungen (11, 12, 12', 47, 48, 76, 94) aufweist, von denen jede zwischen zwei Zungen des anderen Randes einrastet.

3. Baugruppe nach Anspruch 2, bei der sich jeweils zwei Zungen eines Randes in einem Abstand (18) befinden, der im Wesentlichen der Größe der Zunge des anderen Randes entspricht, bevor sie ineinander einrasten.

4. Baugruppe nach einem beliebigen der Ansprüche 2 und 3, bei der jede Zunge (11, 12) an ihrem freien Ende eine Verminderung in der Breite aufweist, die das Einführen zwischen den beiden Zungen des anderen Randes erleichtert.

5. Baugruppe nach einem beliebigen der Ansprüche 1 bis 4, bei der jede Zunge (11, 12, 12', 47, 48, 94) eben ist und sich im Wesentlichen rechtwinklig zum Rand erstreckt.

6. Baugruppe nach einem beliebigen der Ansprüche 1 bis 5, bei der die Zungen derart ausgerichtet sind, dass sich die beiden Teile der Karosserie in Längsrichtung des Fahrzeuges zusammenfügen.

7. Baugruppe nach einem beliebigen der Ansprüche 1 bis 6, bei der das Halteteil (20, 20', 42, 72, 80, 96) mindestens einen offenen Hohlraum umfasst, mit dem es die beiden Zungen und mindestens einen Teil der beiden Ränder der beiden zusammengefügten Teile abdeckt, wobei der Hohlraum mindestens einen Auflagepunkt auf jeder Zunge und mindestens einen Auflagepunkt an jedem Rand hat.

8. Baugruppe nach Anspruch 7, wobei das Halteteil (20, 20') aus einem starren Profil besteht, dessen Querschnitt aufgrund des Hohlraumes innen mindestens einen Teilbereich der Querschnittkonturen der Zungen und mindestens einen Teilbereich der Querschnittkonturen der beiden zusammengefügten Ränder begrenzt.

9. Baugruppe nach Anspruch 7, wobei das Halteteil (42, 72, 80, 96) aus einem elastischen Profil besteht, das zwei Schenkel aufweist, die den Hohlraum eingrenzen und die in der Lage sind, sich durch elastische Verformung gegeneinander aufzuspreizen, um die beiden Zungen durch die Öffnung des Hohlraumes hindurch zu lassen.

10. Baugruppe nach einem beliebigen der Ansprüche 1 bis 9, wobei mindestens eines der Teile (41) Mittel zum Einrasten (58) mit dem Halteteil (42) hat, damit sichergestellt wird, dass letzteres über den Zungen (47, 48) der beiden Ränder (45, 46) festgehalten wird.

11. Baugruppe nach einem beliebigen der Ansprüche 1 bis 10, wobei mindestens eines der beiden Teile (1, 2, 40, 41, 70, 71, 90, 91) aus thermoplastischem oder duroplastischem Kunststoff hergestellt wird.

12. Baugruppe nach einem beliebigen der Ansprüche 1 bis 11, wobei das Halteteil (20, 20', 42, 72, 80) aus Kunststoff hergestellt wird.

13. Karosserieteil einer Baugruppe nach einem beliebigen der Ansprüche 1 bis 12, das eine Außenfläche und einen zu dieser Außenfläche im Wesentlichen rechtwinkligen Rand aufweist, der mindestens eine Zunge aufweist, **dadurch gekennzeichnet, dass** sich die Zunge quer zu dem Rand über die Außenfläche hinweg erstreckt, und zwar auf eine Weise, dass sie zwischen zwei Zungen eines anderen Teiles einrasten kann.

14. Karosserieteil nach Anspruch 13, das eine Vielzahl von Zungen aufweist, von denen sich jeweils zwei auf Abstand befinden.

15. Karosserieteil nach Anspruch 13 oder 14, das ein Mittel zum Einrasten mit einem Halteteil hat, das an seinem Rand eingreift.

16. Stoßfänger eines Kraftfahrzeuges nach den Ansprüchen 13, 14 oder 15.

17. Kotflügel eines Kraftfahrzeuges nach den Ansprüchen 13, 14 oder 15.
